# EUROPEAN PATENT APPLICATION

(11) **EP 4 729 879 A1**
(43) Date of publication of application: **22.04.2026**
(21) Application number: 24207347.6
(22) Date of filing: 17.10.2024
(51) Int. Cl.: G01B 9/02056, G01B 11/24, G01J 9/00, G01N 21/55

(54) **DEVICE AND METHOD FOR DETERMINING CHARACTERISTICS OF A SURFACE OF A TEST OBJECT**

(71) Applicant: Technische Hochschule Deggendorf, in Vertretung des Freistaates Bayern, 94469 Deggendorf (DE)
(72) Inventor: Wagner, Michael, 94209 Regen (DE)
(74) Representative: Pearl Cohen EU

(57) **Abstract**

A device (1) for determining characteristics of a surface of a test object (4) is provided. The device (1) comprises a light source (2) for irradiating a test object (4) with a light beam (LB1), at least one angle-sensitive optical element (6) for reflecting and/or transmitting the light beam (LB2) reflected and/or transmitted by the test object (4), an adjustment unit (7) for adjusting an orientation of the at least one angle-sensitive optical element (6) with respect to the light beam (LB2) reflected and/or transmitted by the test object (4), a detection unit (9) for detecting the light beam (LB3) reflected and/or transmitted by the at least one angle-sensitive optical element (6), and an analysis unit (10). The analysis unit (10) is configured to receive (S3) detection data provided by the detection unit (9), wherein the detection data comprises data of the detected light beam (LB3) reflected and/or transmitted by the at least one angle-sensitive optical element (6) at multiple different orientations of the at least one angle-sensitive optical element (6), analyze (S4) the received detection data in order to identify differences between the data at the multiple different orientations of the at least one angle-sensitive optical element (6), and determine (S5) the characteristics of the surface of the test object (4) based on the identified differences.

## Description

The present disclosure relates to a device and/or a method for determining characteristics of a surface of a test object.

Determining the shape or aberration of a wavefront or phase front is a standard task in optics, especially in adaptive optics and optics manufacturing. The aberration of a wavefront to a reference wavefront can be described with different notations, for example with optical path length differences, as local tilt (local slope of the wavefront) or with Zernike terms. The OPD (optical path difference) and the local tilt (e.g., described with normal vectors) can be converted into each other, e.g., the OPD can be reconstructed if the local tilt was determined using a sensor. The local normal vector of a wavefront is often equated with a light beam in the description.

Several approaches for determining the shape or aberration of a wavefront or phase front are known.

Shack-Hartmann sensors consist of a digital image sensor and a microlens array. The microlens array divides an incident wavefront into subapertures. Each subaperture is assigned to an area of the image sensor which consists of a large number of pixels, e.g., 20x20=400 pixels. A spot is generated on the image sensor by a lens of the microlens array. The local tilt of the wavefront of the subaperture can be determined from the position of the spot. The wavefront can be reconstructed from the information of the local tilt of the subapertures. The robust design of the device and the acquisition of data in a single image are advantageous. A disadvantage of Shack-Hartmann sensors is the severe limitation of the lateral resolution, as a large number of pixels is provided for each subaperture.

Interferometry is another standard method for determining a wavefront. There is a variety of designs, with the phase-shifting Fizeau interferometer with interchangeable lenses being particularly widespread in the optics industry. Due to its high accuracy, interferometry is considered the "gold standard" in optics production. However, the low dynamic range of interferometers is a disadvantage. Optics whose topography deviates greatly from the reference wavefront cannot be measured. The resulting high fringe density of the interference image can no longer be evaluated. For this reason, interferometers cannot be used to measure strong aspheres and free-form bodies, or only with increased effort.

DE 10 2011 076 946 A1 describes that the wavefront to be measured passes through a filter with an angle-dependent transmission. The method combines a high dynamic range and a high lateral resolution. However, the disadvantage of the system is, e.g., the back reflection at the filter and the beam offset caused by the filter. Beams reflected at the filter can in turn be reflected at a measurement object and pass through the system again. A particular disadvantage of beam offset is its dependence on the filter angle position. Reflections and variable beam offset make it difficult to reconstruct the wavefront.

EP 4 246 087 A1 describes another method for wavefront measurement. In this system, an aperture is moved. By taking pictures at different aperture positions, the shape of the wavefront can be reconstructed and conclusions can be drawn about the topography of a test specimen. The method combines a high dynamic range and a high lateral resolution. However, the disadvantage of the system is that the movable aperture requires an optical design to which the aperture is actually accessible and offers sufficient space for kinematics. The use of off-the-shelf optics without modifications is not possible.

In view of this prior art, the object of the present disclosure is to provide a device and a method, each of which is suitable for enriching the prior art.

The object is solved by the features of the independent claims. The dependent claims provide optional further implementations of the disclosure.

Accordingly, the object is solved by a device for determining characteristics of a surface of a test object (and/or for measuring a wavefront of a light beam).

The device comprises a light source for irradiating the test object with a light beam.

The device comprises at least one (e.g., variable, rotatable and/or tiltable) angle-sensitive optical element for reflecting and/or transmitting the light beam reflected and/or transmitted by the test object (i.e., the light beam after being reflected and/or transmitted by the test object, e.g., towards the at least one angle-sensitive optical element).

The device comprises an adjustment unit for adjusting an orientation of the at least one angle-sensitive optical element with respect to the light beam reflected and/or transmitted by the test object.

The device comprises a detection unit for detecting the light beam reflected and/or transmitted by the at least one angle-sensitive optical element (i.e., the light beam after being reflected and/or transmitted by the at least one angle-sensitive optical element, e.g., towards the detection unit).

The device comprises an analysis unit. The analysis unit is configured to receive detection data provided by the detection unit, wherein the detection data comprises data of (and/or related to) the detected light beam reflected and/or transmitted by the at least one angle-sensitive optical element at multiple different orientations of the at least one angle-sensitive optical element. The analysis unit is configured to analyze the received detection data in order to identify differences between the data at the multiple different orientations of the at least one angle-sensitive optical element. The analysis unit is configured to determine the characteristics of the surface of the test object based on the identified differences.

"Angle-sensitive" refers to the at least one angle-sensitive optical element having a functionality for altering a characteristic of the light beam (which is reflected and/or transmitted by the least one angle-sensitive optical element) depending on the orientation of the at least one angle-sensitive optical element and, thus, depending on an angle of incidence of the light beam onto the at least one angle-sensitive optical element. The orientation may be defined by a rotation angle and/or tilt angle of the least one angle-sensitive optical element.

In other words, the at least one angle-sensitive optical element is configured to alter one or more characteristics of the light beam when reflecting and/or transmitting the light beam, wherein the altering depends on the orientation of the at least one angle-sensitive optical element (and/or on an angle of incident of the light beam onto the at least one angle-sensitive optical element). The characteristic(s) may be, e.g., one or more parameters or properties of the light beam, such as its power and/or intensity and/or spectral range and/or central wavelength and/or polarization type and/or polarization direction.

The at least one angle-sensitive optical element may be rotatable and/or tiltable. The adjustment unit may be configured to adjust the orientation (of the least one angle-sensitive optical element) by rotating and/or tilting of the least one angle-sensitive optical element (and/or by altering a rotation angle and/or tilting angle of the least one angle-sensitive optical element).

The at least one angle-sensitive optical element may be configured to suppress an angle-dependent beam offset of the light beam and an angle-dependent shift in a focus position of the light beam caused by the at least one angle-sensitive optical element. The at least one angle-sensitive optical element may be configured to transmit the light beam and (simultaneously) suppress a reflection of the light beam.

The analysis unit may be configured for electronic data processing and/or at least partially configured as an electronic data processing device, which may have, e.g., one or more microprocessors and data storages. For instance, the analysis unit may be a computer. The analysis unit may include, e.g., software and/or at least one algorithm for processing and analyzing the detection data, such as images, to determine the characteristics of the surface of the test object.

The detection data, such as images, may comprise (information of) intensity patterns of the detected light beam at the multiple different orientations of the at least one angle-sensitive optical element. For instance, an intensity pattern of the detected light beam is recorded by the detection unit, the beam path is then varied by adjusting the orientation of the at least one angle-sensitive optical element, and another intensity pattern is recorded. This is repeated, until a large number of intensity patterns is recorded which differ in the variation of the beam characteristic.

The information sought is extracted from the stored detection data (such as the various different intensity patterns), i.e., the shape of the wavefront of the light beam to be determined and, derived from this, a topography of the surface of the test object. In particular, local normal vectors of the wavefront of the light beam and, correspondingly, the local normal vectors of the surface of the test object (i.e., its topology) may be determined by analyzing the detection data. In other words, the determined characteristics of the surface of the test object may comprise a topology (and/or geometry) of the surface of the test object.

In addition, further characteristics of the surface the test object may be determined or derived based on the detection data, e.g., the reflectivity and/or reflectance of the surface, surface defects (scratches and/or digs), and/or roughness and soiling (e.g., dust or haze).

A light beam according to the disclosure is a beam which obeys the laws of reflection, in particular an electromagnetic beam, especially a beam of light, i.e. a light ray or a bundle of light rays. The light beam may comprise a collimated bundle of light rays and/or a converging and/or a diverging bundle of light rays. The light beam may comprise electromagnetic radiation of any kind of wavelength, such as radiation in the ranges of Gigahertz, Terahertz, infrared, visible, ultraviolet, and/or X-ray spectral range. The beam may also comprise other particles e.g. electrons. In general, light or electromagnetic waves may be described with geometrical (ray) optics or physical (wave) optics. Wave optics may account for physical phenomena which are not accounted for in ray optics, e.g., penetration depths in metal reflectors or dielectric layer stacks. Accordingly, the difference between wave and ray optics may be negligible.

The device described above provides the advantage of, among other things, an improved technique for measuring a wavefront of a light beam and/or determining characteristics of a surface of a test object. The device can be used for testing technical surfaces, wherein, in addition to determine the topography of the test object, conclusions can also be drawn about reflectivity and/or reflectance, surface defects, roughness and soiling of the surface. This is possible, because the device can be used to infer not only the local tilt of the wavefront, but also the local (i.e. associated with a single pixel) intensity distribution over the angle. The polarization of the incident wavefront can also be inferred. This device can then be used to draw conclusions about the nature of the surface of the test specimen.

Furthermore, it may be possible to resolve overlapping wavefronts (i.e., wavefronts of different origins). This is relevant when testing optical components with more than one surface (e.g., lenses, achromats) or optical systems consisting of more than one component, in which surfaces or components generate a wavefront that can be assigned to them through transmission or reflection. The relative positioning of the optical surfaces or components can be deduced from the wavefront measurement information. This is important for determining decentration and alignment errors of the components or surfaces.

In comparison to known Shack-Hartmann sensors, the device of the present disclosure dispenses with a microlens array. Instead, a wavefront tilt can be assigned to, e.g., each pixel, i.e., a subaperture can be assigned to each pixel, which means that the lateral resolution is significantly higher than with Shack-Hartmann sensors. In comparison to known interferometers, the device has an increased dynamic range and is particularly suitable for determining the topography of aspheres and free-form surfaces in optics production. In comparison to DE 10 2011 076 946 A1, the device avoids back reflections or reduces them to a minimum, making reconstruction of the wavefront much easier. In comparison to EP 4 246 087 A1, the device allows off-the-shelf optics to be used to construct the device.

Possible further implementations of the device described herein are explained in detail below.

The device may comprise a control unit. The control unit may be configured to control at least one actuator of the adjustment unit to repeatedly adjust the orientation of the at least one angle-sensitive optical element to one of the multiple different orientations. The control unit may be configured to control the detection unit to detect the light beam after each adjustment of the orientation of the at least one angle-sensitive optical element.

The device may comprise a sensor unit. The sensor unit may be configured to determine a current orientation of the at least one angle-sensitive optical element after each adjustment of the orientation of the at least one angle-sensitive optical element. The current orientation may be one of the multiple different orientations. The sensor unit may be configured to provide the multiple different orientations to the analysis unit.

The analysis unit may be configured to determine the characteristics of the surface of the test object based on the identified differences and the provided multiple different orientations.

The control unit may be configured to control the light source to repeatedly vary a wavelength and/or a polarization of the light beam provided by the light source. The control unit may be configured to control the detection unit to detect the light beam after each variation of the wavelength and/or polarization of the light beam.

The analysis unit may be configured to receive the detection data which further comprises data of (and/or related to) the detected light beam reflected and/or transmitted by the at least one angle-sensitive optical element at multiple different wavelengths and/or polarizations of the light beam provided by the light source. The analysis unit may be configured to analyze the received detection data in order to identify differences between the data at the multiple different orientations of the at least one angle-sensitive optical element and at the multiple different wavelengths and/or polarizations of the light beam, and to determine the characteristics of the surface of the test object based on the identified differences.

The detector unit may be or may comprise an image sensor, e.g., a CCD sensor, and/or a wavefront sensor.

The analysis unit and/or the control unit may be (e.g., part of) a computer. The analysis unit and the control unit may be realized by the same unit, e.g., the same computer.

The light source may comprise one or more illuminated surfaces, which may be circular, annular or may have other shapes. The one or more illuminated surfaces may be one or more ends of one or more illuminated optical fibers.

The device may comprise at least one optical element, e.g., arranged between the light source and the test object. The at least one optical element may comprise a collimator, a matching optic and/or a beam splitter. The matching optic may be configured to adapt the light beam (e.g., a wavefront of the light beam) to the test object (e.g., a radius of the test object).

The device may comprise an imaging optics arranged between the at least one angle-sensitive optical element and the detection unit. The imaging optics may be configured to image the light beam reflected and/or transmitted by the at least one angle-sensitive optical element onto the detection unit.

The at least one angle-selective optical element may comprise one or more layers, surfaces and/or bodies whose reflection, transmission and/or absorption may be dependent on the angle of incidence of the light beam onto the at least one angle-sensitive optical element. The at least one angle-selective optical element may comprise interference layers, diffractive elements, (optional pure) absorption filters, reflective elements, metals and/or glasses.

The device may comprise a reference unit. The reference unit may be configured to perform one or more reference measurements of light intensity of the light source (and/or of light provided by/at the light source) and to provide the one or more reference measurements to the analysis unit.

The analysis unit may be configured to take the provided one or more reference measurements into account when analyzing the received detection data and/or when determining the characteristics of the surface of the test object.

The device may comprise at least one beam splitter for splitting the light beam reflected and/or transmitted by the at least one angle-sensitive optical element. The device may comprise multiple detection units, e.g., wherein each of the multiple detection units may be arranged to detect a split part of the light beam.

The at least one angle-sensitive optical element may comprise at least one combination of an optical transmission filter and an absorption filter. For instance, the absorption filter may be arranged such that the light beam provided by the light source is transmitted through the absorption filter before reaching the optical transmission filter. In other words, the absorption filter may be arranged in a beam path of the light beam between the light source and the optical transmission filter.

The absorption filter may be provided with an angle-sensitive coating.

The at least one combination (and/or the optical transmission filter) may be movably arranged in a (e.g., cardanic) suspension.

The absorption filter may be a neutral density filter.

The absorption filter of each combination may be angle-sensitive by having applied an angle-sensitive coating or surface property and/or by virtue of exhibiting a path-dependent absorption function. In other words, only the absorption filter of the at least one combination may be angle-sensitive.

The at least one angle-sensitive optical element may be arranged in an index matching fluid. The index matching fluid may be chosen such that a refractive index of the index matching fluid matches the refractive index of the angle-sensitive optical element. Applying the index matching fluid may reduce or minimize alterations of the beam path by a movement of the angle-sensitive optical element.

The at least one angle-sensitive optical element may comprise at least one (e.g., open) prism and/or retro reflector rotatable around at least one rotation axis. The adjustment unit may be configured to adjust the orientation by rotating the at least one (e.g., open) prism and/or retro reflector around the at least one rotation axis.

The at least one prism may be or may comprise (and/or may be designed as), e.g., a glass body. The at least one prism may be made of a transparent or tinted material.

The at least one prism may be an open prism and/or may comprise an arrangement of reflectors.

The at least one prism may be a beam deflection device (e.g., for deflecting the light beam). The beam deflection device may comprise multiple reflection surfaces having a predetermined relative orientation with respect to each other. The beam deflection device may be configured to be tiltable around an optical center of the beam deflection device such that the predetermined relative orientation of the multiple reflection surfaces is maintained. The relative orientation of the multiple reflection surfaces may be adjusted to cause a predetermined deflection angle for the deflected light beam. The beam deflection device may be configured such that a variation of the predetermined beam deflection angle is zero or limited to a predetermined maximum deviation when tilting the beam deflection device around the optical center within a predetermined angular range of a tilt angle. The beam deflection device may be configured such that a variation of the geometric properties of the deflected light beam is zero or limited to a predetermined maximum deviation when tilting the beam deflection device around the optical center within a predetermined angular range of a tilt angle. At least one reflection surface of the multiple reflection surfaces may comprise a functionality for altering a characteristic of the deflected light beam depending on the tilt angle of the beam deflection device around the optical center.

The multiple reflection surfaces may comprise a first reflection surface extending in a first reflection plane and a second reflection surface extending in a second reflection plane. The first reflection plane and the second reflection plane may have a common intersection axis and are arranged such that an opening angle between the first reflection plane and the second reflection plane corresponds to half of the predetermined deflection angle. The optical center may correspond to or may be located on the common intersection axis.

The multiple reflection surfaces may comprise at least one roof reflector having two reflection surfaces intersecting in a roof reflector intersection axis.

The multiple reflection surfaces may comprise two roof reflectors each having two reflection surfaces intersecting in a respective roof reflector intersection axis, wherein the roof intersection axes of the two roof reflectors intersect in an intersection point, and wherein the optical center corresponds to or is located on/in the intersection point.

The characteristic of the deflected light beam altered by the functionality of the at least one reflection surface of the multiple reflection surfaces may comprise one or more of the following light beam properties: a spectral range of the deflected light beam, a central wavelength of the deflected light beam, a diffraction pattern of the deflected light beam, a polarization type of the deflected light beam, a polarization direction of the deflected light beam, a power of the deflected light beam, and an intensity of the deflected light beam.

The beam deflection device may be configured such that the functionality of the at least one reflection surface of the multiple second reflection surfaces for altering a characteristic of the deflected light beam depends on a tilt angle by which the beam deflection device is tilted around the optical center.

The beam deflection device may be further configured such that the functionality of the at least one reflection surface of the multiple second reflection surfaces for altering a characteristic of the deflected light beam depends on the position at which the light beam intersects with the at least one reflection surface of the multiple reflection surfaces.

The functionality for altering a characteristic of the deflected light beam may be provided by one or more of the following functional elements comprised by the at least one reflection surface of the multiple reflection surfaces: an interference arrangement (preferably comprising several interference layers), a spectral interference filter element (preferably comprising a metal interference filter element), a dichroic mirror, a diffractive element (preferably comprising a grating arranged at the respective reflection surface and/or a holographic volume grating), a refractive or reflective element having a predetermined complex refractive index, and an absorption element.

The beam deflection device (and/or the adjustment unit) may further comprise a support unit for supporting the multiple reflection surfaces, wherein the support unit may be configured to tilt the multiple reflection surfaces around the optical center. The support unit may be further configured to move the multiple reflection surfaces in a translational manner perpendicular to an axis corresponding to the optical center or extending through the optical center. The support unit may be part of the adjustment unit.

The optical center may correspond to or may be located on a common intersection axis of two or more reflection surfaces of the multiple reflection surfaces or reflection planes in which the respective reflection surfaces extend, respectively, or may correspond to or may be located on an intersection point of at least two roof reflector intersection axes of roof reflectors of the multiple reflection surfaces or on an axis extending through said intersection point.

A volume between the multiple reflection surfaces may have at least partially a refractive index deviating from a refractive index of a surrounding of the beam deflection device. The optical center may deviate from the common intersection axis of the two or more reflection surfaces or from the intersection point of at least two roof reflector intersection axes in such a manner, that a deviation of an optical path of the deflected light beam due to optical refraction in the volume between the multiple reflection surfaces is at least partly compensated.

An adjustment of the beam deflection device such that the variation of the predetermined beam deflection angle is zero or limited to a predetermined maximum deviation may be based on adjusting a position of the optical center of the beam deflection device with respect to the multiple reflection surfaces.

The at least one retro reflector may comprise at least three surfaces arranged at 90° with respect to each other.

The at least one angle-sensitive optical element may comprise at least one rotation filter. The at least one rotation filter may comprise a rotationally symmetric outer body and an optical (e.g., transmission, reflection and/or interference) filter and/or an absorbing material arranged inside the body. The at least one rotation filter (and/or the at least one angle-sensitive optical element) may be rotatable around a symmetry axis of the body. The adjustment unit may be configured to adjust the orientation by rotating the at least one rotation filter around the symmetry axis of the body.

The optical filter may be arranged (e.g., rotationally) asymmetric (and/or slanted) with respect to the symmetry axis of the body. The optical filter may be a filter layer and/or may be conical and/or spherical shaped.

The body may be a cylindrical disc and the optical filter may be a planar optical filter. The body may be a cylindrical disc and the absorbing material may be a cylindrical homogeneous filter. Alternatively or in addition, the body may be a lens and/or a plate.

The absorbing material may be arranged inside the body to provide an angle-sensitive (light) absorption efficiency.

The rotation filter may further comprise a mirror layer and/or an absorption filter (layer).

The detection unit may be an image sensor unit. The detection data may comprise image data (e.g., an image) of a light intensity pattern of the detected light beam reflected and/or transmitted by the at least one angle-sensitive optical element at each of the multiple different orientations, respectively.

Furthermore, a method for determining characteristics of a surface of a test object using the above-described device is provided.

The method comprises controlling the adjustment unit to repeatedly adjust the orientation of the at least one angle-sensitive optical element to one of multiple different orientations.

The method comprises controlling the detection unit to detect the light beam after each adjustment of the orientation of the at least one angle-sensitive optical element.

The method comprises receiving detection data provided by the detection unit. The detection data comprises data of the detected light beam reflected and/or transmitted by the at least one angle-sensitive optical element at multiple different orientations of the at least one angle-sensitive optical element.

The method comprises analyzing the received detection data in order to identify differences between the data at the multiple different orientations of the at least one angle-sensitive optical element.

The method comprises determining the characteristics of the surface of the test object based on the identified differences.

What is described herein with respect to the device applies analogously to the method and vice versa.

It is understood by a person skilled in the art that the above-described features and the features in the following description and figures are not only disclosed in the explicitly disclosed embodiments and combinations, but that also other technically feasible combinations as well as the isolated features are comprised by the disclosure. In the following, several optional embodiments and specific examples are described with reference to the figures for illustrating the disclosure without limiting the disclosure to the described embodiments.

Optional embodiments are described below with reference to Figs. 1 to 12F.
- Fig. 1: shows a schematic overview of a device according to an embodiment of the disclosure;
- Fig. 2: shows a schematic flow diagram of a method according to an embodiment of the disclosure;
- Figs. 3A-F: show schematically the device according to various embodiments of the disclosure;
- Figs. 4A-D: show schematically four examples of an angle-sensitive optical element comprising an optical transmission filter;
- Figs. 5A-C: show schematically an example of an angle-sensitive optical element comprising an open prism at three different orientations;
- Figs. 6A-F: show schematically six examples of an angle-sensitive optical element comprising a rotation filter;
- Figs. 7A-C: show schematically three diagrams illustrating an exemplary analysis of detection data using the device with an angle-sensitive optical element comprising an optical transmission filter;
- Figs. 8A-D: show schematically four diagrams illustrating an exemplary analysis of detection data using the device with an angle-sensitive optical element comprising an open prism constructed by two identical interference filters;
- Figs. 9A-B: show schematically two diagrams illustrating an exemplary analysis of detection data using the device with an angle-sensitive optical element comprising an open prism constructed by two different interference filters;
- Figs. 10A-D: show schematically four diagrams illustrating an exemplary analysis of detection data using the device with an angle-sensitive optical element comprising a rotation filter;
- Fig. 11: shows schematically a diagram with three intensity curves based on analyses of detection data using a device according to an optional embodiment of the disclosure; and
- Figs. 12A-G: show schematically six exemplary diagrams illustrating measured values of the test object based on an analysis using, e.g., a digital twin.

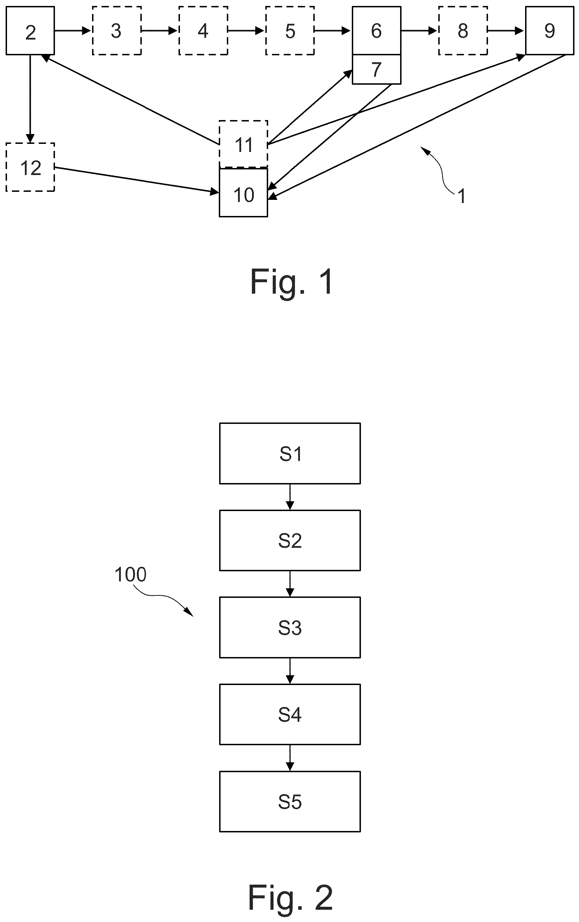

Fig. 1 shows a schematic overview of the device 1 for determining characteristics of a surface of a test object 4 according to an embodiment of the disclosure.

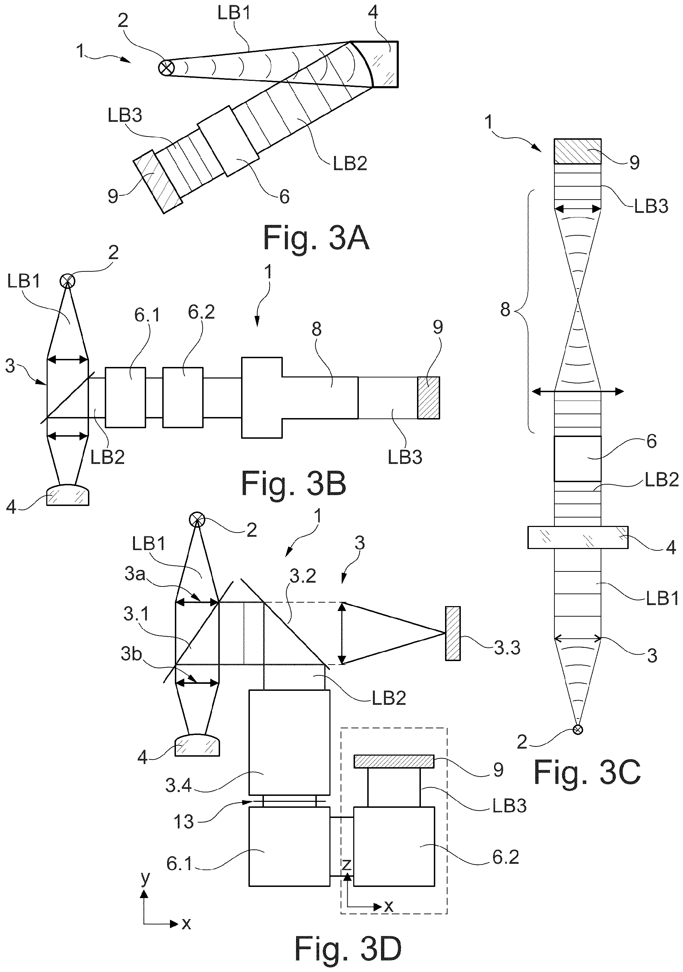

The device 1 comprises a light source 2 for irradiating the test object 4 with a light beam LB1 (see Fig. 3A).

The light source 2 may be configured to generate the light beam with a wavefront adapted to the test object 4. The light source 2 may comprise one or more illuminated surfaces (e.g., end(s) of one or more illuminated glass fibers), which may be circular, annular or may have another shape.

The test object 4 is not part of the device 1, but may be arranged in the beam path of the device 1 to enable testing of the test object 4 using reflection and/or transmission.

In particular, a specific surface of the test object 4 is tested (and/or analyzed) using reflection and/or transmission, wherein said surface may be the surface of incidence of the light beam LB1 provided by the light source 2.

The device 1 may comprise at least one optical element 3 arranged between the light source 1 and the test object 4. The at least one optical element 3 may comprise, e.g., a collimator, a matching optic (e.g., to adapt the wavefront of the light beam to the test object 4, such as a radius of the test object 4) and/or a beam splitter.

The device 1 comprises at least one optical element 5 and at least one (e.g., variable, rotatable and/or tiltable) angle-sensitive optical element 6 for reflecting and/or transmitting the light beam LB2 (see Fig. 3A) reflected and/or transmitted by the test object 4, and an adjustment unit 7 for adjusting an orientation of the at least one angle-sensitive optical element 6 with respect to the light beam LB2 reflected and/or transmitted by the test object 4.

More than one angle-sensitive optical element 6 may be used in the setup of the device 1, such as two, three or more angle-sensitive optical elements 6 in order to increase the measurement accuracy of the device 1. The at least one angle-sensitive optical element 6 may be inserted at any location in the beam path of the light beam LB2 wherein the gradient of a surface of the test object 4 may be deduced from the light beam angle (i.e., the local normal of the wavefront of the light beam) to be detected by the at least one angle-sensitive optical element 6.

The at least one angle-selective optical element 6 may comprise one or more layers, surfaces and/or bodies whose reflection, transmission and/or absorption may be dependent on the angle of incidence, e. g., interference layers, diffractive elements, bulk material with a complex refractive index, such as metals and/or glasses. Pure absorption filters also generally have a dependence of the transmission on the angle of incidence, as the path length within the filter and thus the transmission depend on said angle.

The device 1 further comprises a detection unit 9 for detecting the light beam LB3 (see Fig. 3A) reflected and/or transmitted by the at least one angle-sensitive optical element 6. The detector unit 9 may be or may comprise an image sensor, e.g., a CCD sensor, and/or a wavefront sensor.

The device 1 may comprise an imaging optics 8 arranged between the at least one angle-sensitive optical element 6 and the detection unit 9. The imaging optics 8 may be configured to image the light beam LB3 reflected and/or transmitted by the at least one angle-sensitive optical element 6 onto the detection unit 9.

Optionally, one or more polarization elements 13 (not shown in Fig. 1) may be inserted at any location in the beam path of the light beam to, e.g., simplify the evaluation of the data obtained.

The device 1 further comprises an analysis unit 10. The analysis unit 10 is configured to receive detection data provided by the detection unit 9, wherein the detection data comprises data of the detected light beam LB3 reflected and/or transmitted by the at least one angle-sensitive optical element 6 at multiple different orientations of the at least one angle-sensitive optical element 6. The analysis unit 10 is further configured to analyze the received detection data in order to identify differences between the data at the multiple different orientations of the at least one angle-sensitive optical element 6, and to determine the characteristics of the surface of the test object 4 based on the identified differences.

The light beam LB2 is composed of at least a portion of the light beam LB1 which is reflected and/or transmitted by the test object 4 towards the at least one angle-sensitive optical element 6. Additionally, the light beam LB2 may comprise one or more altered characteristics in comparison to the light beam LB1 (in addition to an altered beam direction).

Similarly, the light beam LB3 is composed of at least a portion of the light beam LB2 which is reflected and/or transmitted by the at least one angle-sensitive optical element 6 towards the detection unit 9. Additionally, the light beam LB3 may comprise one or more altered characteristics in comparison to the light beam LB2 (in addition to an altered beam direction).

The device 1 may comprise a control unit 11 configured to control at least one actuator of the adjustment unit 7 to repeatedly adjust the orientation of the at least one angle-sensitive optical element 6 to one of multiple different orientations, and to control the detection unit 9 to detect the light beam LB3 after each adjustment of the orientation of the at least one angle-sensitive optical element 6.

The analysis unit 10 and/or the control unit 11 may be realized by a computer, such as the same computer. Accordingly, the analysis unit 10 and the control unit 11 may be realized by the same unit.

The device 1 may comprise a sensor unit (not shown in Fig. 1) configured to determine a current orientation of the at least one angle-sensitive optical element 6 after each adjustment of the orientation of the at least one angle-sensitive optical element 6, wherein the current orientation is one of the multiple different orientations, and to provide the multiple different orientations to the analysis unit 10. The analysis unit 10 may be configured to determine the characteristics of the surface of the test object 4 based on the identified differences and the provided multiple different orientations. The sensor unit may be part of the adjustment unit 7.

The control unit 11 may be configured to control the light source 2 to repeatedly vary a wavelength and/or a polarization of the light beam LB1 provided by the light source 2, and to control the detection unit 9 to detect the light beam LB3 after each variation of the wavelength and/or polarization of the light beam LB1.

Accordingly, the analysis unit 10 may be configured to receive the detection data which further comprises data of the detected light beam LB3 (reflected and/or transmitted by the at least one angle-sensitive optical element 6) at multiple different wavelengths and/or polarizations of the light beam LB1 provided by the light source 2, to analyze the received detection data in order to identify differences between the data at the multiple different orientations of the at least one angle-sensitive optical element 6 and/or at the multiple different wavelengths and/or polarizations of the light beam LB1, and to determine the characteristics of the surface of the test object 4 based on the identified differences.

Optionally, the device 1 may comprise a reference unit 12 configured to perform reference measurements of the intensity of the light beam LB1 provided by/at the light source 2 so that any power fluctuations of the light source may be taken into account in the measurement.

Optionally, the device 1 may comprise at least one beam splitter (not shown in Fig. 1) for splitting the light beam LB3 reflected and/or transmitted by the at least one angle-sensitive optical element 6. Accordingly, the device 1 may comprise multiple detection units 9, e.g., multiple wavefront sensors, (not shown in Fig. 1) wherein each of the multiple detection units 9 may be arranged to detect a split part of the light beam LB3. In other words, the wavefront of the light beam LB3 may be split using one or more beam splitters so that the light beam LB3 may be fed to several detection units 9. The simultaneous measurement of said split wavefronts with several detection units 9 may lead to a reduction in measurement time.

Furthermore, in interferometers for optics production, there is generally an additional integrated beam path in which the incident wavefront is focused on a point and, e.g., imaged onto a crosshair. This optional beam path may help to adjust the alignment of the test object 4 to the test system. Such an additional beam path may optionally be integrated into the device 1 (not shown in Fig. 1).

Interferometers for optics production usually have imaging optics with variable magnification and a device for adjusting the focus. These may optionally also be used with the present beam path of the device 1 (not shown in Fig. 1). It may be helpful to adjust the magnification if the at least one angle-sensitive optical element 6 is arranged after/behind the variable magnification optics, as the magnification has an influence on the local normal vectors of the wavefront of the light beam.

Due to the similarity of the optical structure of the present disclosure with the optical structure of interferometers, such as Fizeau interferometers, both principles may be combined in one device. The interferometric measurement may not be significantly impaired by the at least one angle-sensitive optical element 6. Both principles may require different types of light sources (in terms of coherence) or devices for adjusting the coherence (e.g., rotating focusing screens). The measurement using the at least one angle-sensitive optical element 6 may be affected by the reference wavefront generated by the, e.g., Fizeau, objective. This interference may be avoided if the light sources of the two measurement principles use different wavelengths and if the interferometric reference surface may only partially reflect the wavelength of the interferometric measurement, and otherwise transmits the other wavelength. Known techniques for interferometers may be adopted for the measurement using the at least one angle-sensitive optical element 6.

In order to determine characteristics of the surface of the test object 4, the device 1, in particular the analysis unit 10 and/or the control unit 11, is designed to execute the method 100 described below in detail with reference to Fig. 2.

In a first step S1, the adjustment unit 7 is controlled to repeatedly adjust the orientation of the at least one angle-sensitive optical element 6 to one of multiple different orientations.

In a second step S2, the detection unit 9 is controlled to detect the light beam LB3 after each adjustment of the orientation of the at least one angle-sensitive optical element 6.

Alternatively or in addition to adjusting the orientation of the at least one angle-sensitive optical element 6, the light source 2 may be controlled to repeatedly vary a wavelength and/or a polarization of the light beam LB1 provided by the light source 2, and the detection unit 9 may be controlled to detect the light beam LB3 after each variation of the wavelength and/or polarization of the light beam LB1.

In a third step S3, detection data provided by the detection unit 9 is received, wherein the detection data comprises data of the detected light beam LB3 reflected and/or transmitted by the at least one angle-sensitive optical element 6 at multiple different orientations of the at least one angle-sensitive optical element 6.

The detection data may further comprise data of the detected light beam LB3 at multiple different wavelengths and/or polarizations of the light beam LB1 provided by the light source 2.

In a fourth step S4, the received detection data is analyzed in order to identify differences between the data at the multiple different orientations of the at least one angle-sensitive optical element 6 (optionally and/or at the multiple different wavelengths and/or polarizations of the light beam LB1).

In a fifth step S5, the characteristics of the surface of the test object 4 is determined based on the identified differences.

In other words, the measurement setup of the device 1 is used to record detection data, e.g., a sensor image, comprising information of, e.g., an intensity pattern of the detected light beam LB3. The recorded detection data is then stored on the analysis unit 10, e.g., on a computer. The beam path is then varied by adjusting the orientation of the at least one angle-sensitive optical element 6, and another detection data, e.g., another sensor image, is recorded and saved. A large number of detection data, e.g., a large number of sensor images, is created, which differ in the variation of the beam characteristic.

The information sought is extracted from the stored detection data, such as the various different intensity patterns, i.e., the shape of the wavefront of the light beam LB3 to be determined and, derived from this, a topography of the surface of the test object 4 and optionally other properties of the surface of the test object 4. Accordingly, the device 1 may be also called a wavefront scanner (e.g., for inspecting a (technical) surface).

In addition, further properties of the wavefront or the test object 4 may be determined or derived, e.g., the polarization or whether the surface of the test object 4 is dirty, has surface defects and/or varying roughness.

There are a number of technical methods that may be used to analyze the detection data, e.g., to evaluate the different intensity patterns. First and foremost, the evaluation may be used to determine the local tilt of a wavefront and, derived from this, the local gradient of a surface of the test object 4.

Figs. 3A-D show schematically the device 1 according to four embodiments of the disclosure.

In Fig. 3A, the incident light beam LB1 is at least partially reflected by the test object 4, resulting in the light beam LB2 reflected towards the angle-sensitive optical element 6. In this example, the surface of the test object 4 is formed as an (off-axis) parabolic.

In Fig. 3B, the incident light beam LB1 is at least partially reflected by the test object 4, resulting in the light beam LB2 reflected towards two angle-sensitive optical elements 6.1, 6.2 via the optical element 3 which is realized by a beam splitter in this example. Additionally, the device 1 comprises the imaging optics 8.

In Fig. 3C, the incident light beam LB1 is at least partially transmitted by the test object 4, resulting in the light beam LB2 transmitted towards the angle-sensitive optical element 6. This exemplary device 1 comprises the optical element 3 which may be an objective lens for adapting the wavefront of the light beam and the imaging optics 8.

In Fig. 3D, the incident light beam LB1 is at least partially reflected by the test object 4, resulting in the light beam LB2 reflected towards two angle-sensitive optical elements 6.1, 6.2 via multiple optical elements 3. These multiple optical elements 3 comprise two beam splitters 3.1, 3.2. A part of the light beam LB2 is focused on the object 3.3, which is a reticle or an image sensor. The knowledge of the position of the focal point on the object 3.3 is useful to align the test object 4 to the measurement device.

The multiple optical elements 3 comprise multiple optical lenses, including a collimating lens 3a and a lens 3b for adapting the wavefront. The multiple optical elements 3 further comprise a zoom lens 3.4 which is arranged in the beam path after/behind the two beam splitters 3.1, 3.2. Additionally, a polarizing element 13 is arranged between the zoom lens 3.4 and the first of the two angle-sensitive optical elements 6.1 and 6.2.

Each of the two angle-sensitive optical elements 6.1 and 6.2 is (in this example) configured to deflect the light beam by 90°, first in the indicated XY-plane and then in the indicated ZX-plane.

The angle-selective optical element 6 may comprise an optical transmission filter 61.

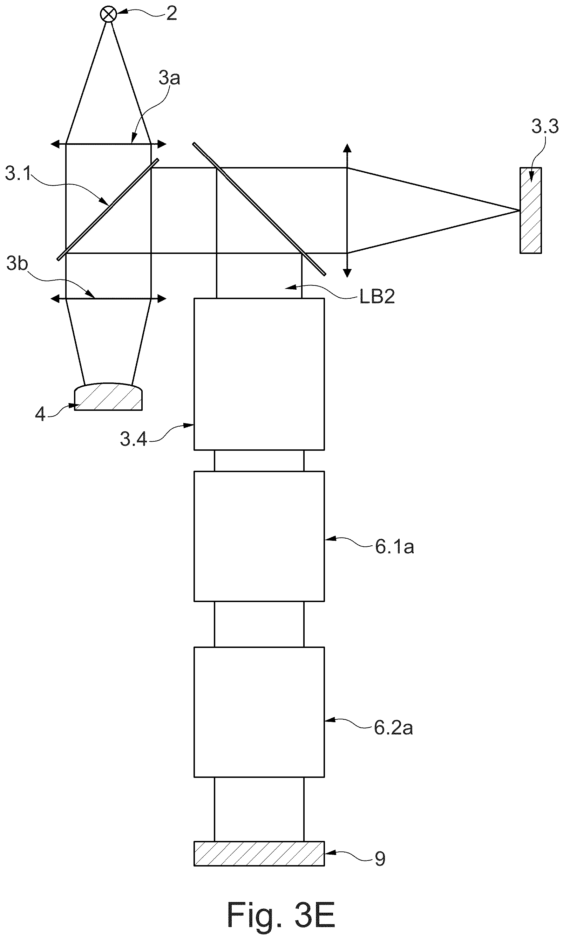

Fig. 3E shows a system analogue to the embodiment shown in Fig. 3D, where the two angle-sensitive beam deflecting optical elements 6.1, 6.2 are replaced with two angle-sensitive beam non-deflecting transmitting optical elements.

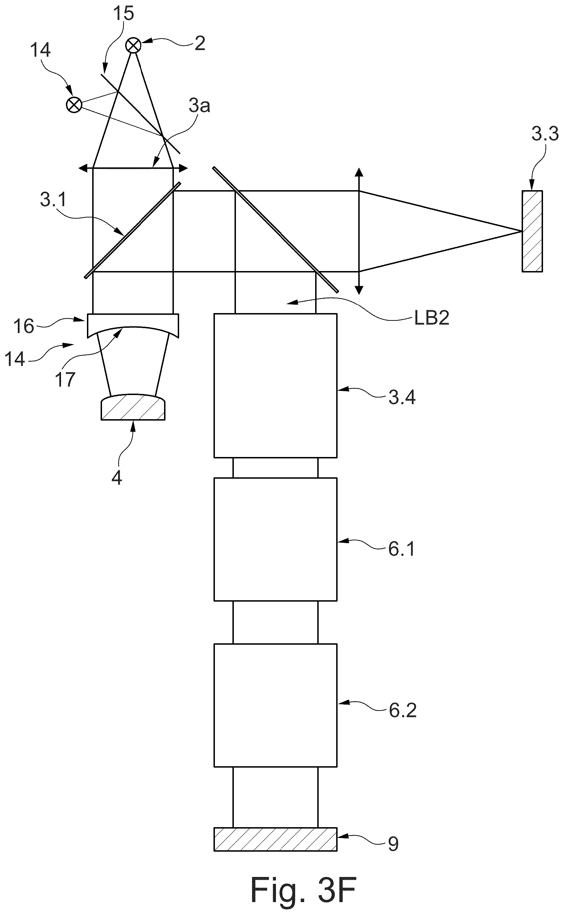

Fig. 3F illustrates a system analogue to the embodiments shown in Fig. 3C and Fig. 3D, respectively, which combines the operating principle of the current system with the operating principle of a Fizeau interferometer 14. This system is augmented with an interferometer light source 14a suitable for interferometry, which is coupled into the system via an additional beam splitter 15. The transmission sphere 16 provides the reference surface 17 of the Fizeau cavity.

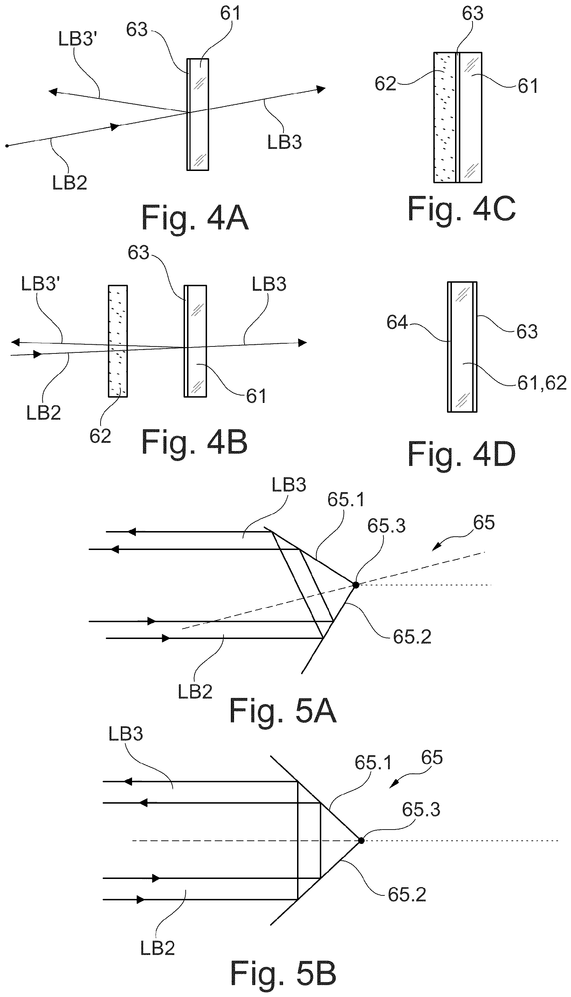

Figs. 4A-D show examples of the optical transmission filter 61.

Such an (e.g., angle-sensitive) optical transmission filter 61 is shown in Fig. 4a, wherein the optical transmission filter 61 comprises an angle-sensitive coating 63.

The optical transmission filter 61 may be moved by actuators (e.g., in two axes in a cardanic suspension) (not shown) and its angular deflection may be determined by sensors (not shown). In this embodiment, a portion of the incident light beam LB2 may be reflected by the optical transmission filter 61, which is indicated as light beam LB3' in Fig. 4A. Said light beam LB3' may then be reflected by the test object 4 and may propagate back to the filter 61 (optionally at a different angle). This part of the light beam may interfere with the evaluation of the measurement, as the direct correlation between the filter curve of the filter 61 and the course of the measured intensity pattern is no longer given. The filter curve may refer to the spectral characteristics of the filter 61.

In the following calculation example, an output power of a measuring beam of 100 % and a test object reflectivity of 100 % are assumed. The transmission of the moving filter is 95%. The signal has a power of 95%. The reflected portion of the useful signal has a power of 5%. This is reflected by the test object 4 and propagates back to the filter. A portion is transmitted through the filter and reaches the image sensor as an interference signal with a power of 4.75 %. The ratio of useful signal to interference signal is 20:1 if higher orders of reflections are not taken into account.

Reflection suppression may be achieved by adding an absorption filter 62 to the system. In other words, the at least one angle-sensitive optical element 6 may comprise at least one combination of an optical transmission filter 61 and an absorption filter 62.

This absorption filter 62 may be a neutral density filter (ND filter) with a transmission value of, e.g., 1 :1000. If the ND filter is added to the calculation example, the useful signal, i.e. the usable signal, has a power of 0.095 %. The beam of the interfering signal, on the other hand, passes through the ND filter twice as often as the beam of the useful signal. The power of the interfering signal is then 0.0000000475 %. The ratio of useful signal to interference signal is 2000000:1. The interference signal can effectively be neglected in this case. There are various ways of integrating the absorption filter 62 into the system.

Figs. 4B-D show three embodiments of said combination, wherein the absorption filter 62 may be arranged adjacent to the optical transmission filter 61, either with a gap between the absorption filter 62 and the optical transmission filter 61 (Fig. 4B), where the absorption filter 62 may be kept fixed relative to the transmission filter 61 or the static parts of the system, or the absorption filter 62 and the optical transmission filter 61 being in contact with each other (Fig. 4C). Alternatively, the absorption filter 62 may be (fully) integrated in the optical transmission filter 61, wherein the combination may further comprise an anti-reflex coating 64 (Fig. 4D).

Depending on the thickness of the filter (i.e., the combination of the absorption filter 62 and the optical transmission filter 61) and its angular position, an angle-dependent beam offset and an angle-dependent shift in the focus position may occur. This means that the evaluation of the measurement may be still complex, but much simpler than if it were subject to back reflections.

Alternatively or in addition, the optical transmission filter 61 (or the combination of the absorption filter 62 and the optical transmission filter 61) may be suspended in an index fluid. The refractive index of the filter material and said index fluid may be matched to each other. This may reduce the angle-dependent beam offset and the angle-dependent shift of the focus position to a minimum. This may considerably simplify the evaluation of the measurement.

The angle-dependent transmission may be primarily caused by the absorption filter 62, i.e., there may be no need to apply an angle-sensitive coating 63 on the optical transmission filter 61. The transmission at different angular positions may be calculated using Beer-Lambert's law if the thickness and the absorption of the filters 61, 62 are known. This may result in an easier evaluation of the measurement results.

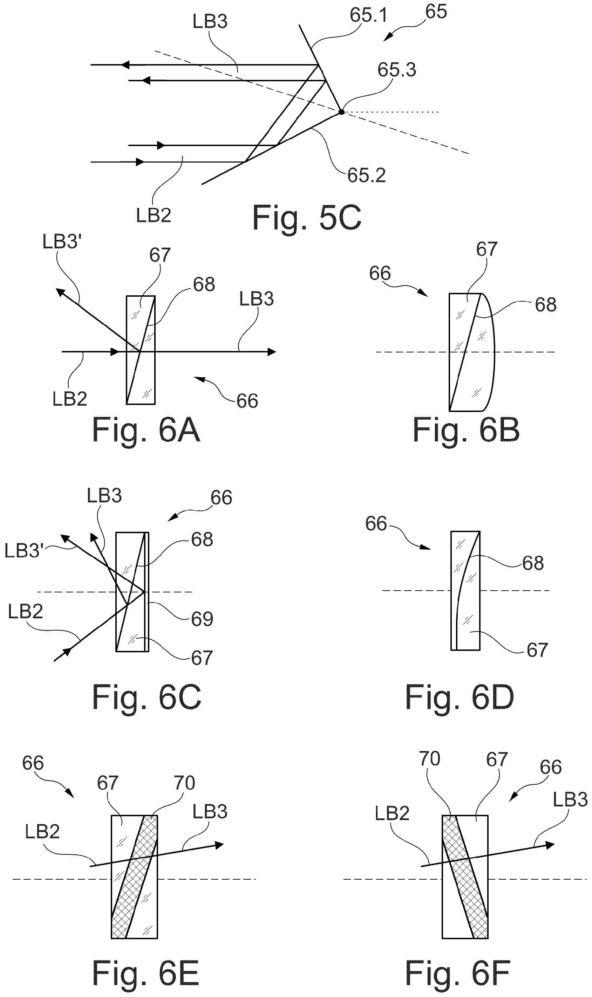

The angle-selective optical element 6 may comprise a prism, such as an open prism. Figs. 5A-C show examples of an open prism 65, specifically a beam deflection device 65, at three different orientations.

The prism may have one or more axes of rotation, wherein the prism may be rotated around the axis or axes of rotation using actuators (not shown) and the respective angular deflection may be determined using sensors (not shown). The incident light beam is reflected at least twice and is directed to the detection unit 9, e.g., an image sensor, wherein the detected light beam represents the useful signal. The parts of the light beam transmitted or absorbed by the prism may not act as an interference signal as they may not reach the detection unit 9, i.e., they leave the beam path and are absorbed. Prisms may be designed as glass bodies or as an open (hollow) arrangement of reflectors.

Open prisms may be particularly advantageous. When such an open prism is rotated around its optical center, there may be no (or only a negligible) beam offset, no (or only a negligible) shift in the focus position and, due to the principle, no interfering signal.

Glass prisms may also be advantageous. When such a prism is rotated around its wavelength-dependent optical center, there may be a negligible beam offset, as well as a negligible shift in the focus position.

The open prism 65 may be a beam deflection device 65, which is shown in Figs. 5A-C. The beam deflection device 65 comprises multiple, e.g., two, reflection surfaces 65.1, 65.2 having a predetermined relative orientation with respect to each other. The beam deflection device 65 is configured to be tiltable around an optical center 65.3 of the beam deflection device 65 such that the predetermined relative orientation of the multiple reflection surfaces 65.1, 65.2 is maintained. The relative orientation of the multiple reflection surfaces 65.1, 65.2 may be adjusted to cause a predetermined deflection angle for the deflected light beam LB3. The beam deflection device 65 may be configured such that a variation of the predetermined beam deflection angle is zero or limited to a predetermined maximum deviation when tilting the beam deflection device 65 around the optical center 65.3 within a predetermined angular range of a tilt angle. The beam deflection device 65 may be configured such that a variation of the geometric properties of the deflected light beam LB3 is zero or limited to a predetermined maximum deviation when tilting the beam deflection device 65 around the optical center 65.3 within a predetermined angular range of a tilt angle. At least one reflection surface 65.1, 65.2 of the multiple reflection surfaces 65.1, 65.2 may comprise a functionality for altering a characteristic of the deflected light beam LB3 depending on the tilt angle of the beam deflection device 65 around the optical center 65.3.

Prisms made of transparent or tinted material with an adapted position of the axis of rotation may be also particularly advantageous. When such a prism is rotated, there may be only a slight beam offset, only a slight shift in the focus position and, due to the principle, no interfering signal.

Retro reflectors (open (hollow) or made of transparent or tinted material), which may comprise three surfaces arranged at 90° with respect to each other, may also be used as a rotatable prism.

Since the detected light beam may experience no or only negligibly small beam offsets or focus position shifts when the prism angle or prism angles are changed in the case of prisms with optimized pivot points and may not be superimposed by interfering signals, the evaluation can be carried out much more easily.

The angle-selective optical element 6 may comprise a rotation filter 66. Figs. 6A-F show examples of such a rotation filter 66.

The rotation filter 66 may comprise a (e.g., effectively) rotationally symmetrical body 67, e.g., a lens or a plate, and an optical filter 68 arranged inside the body 67, wherein the rotation filter 66 may be rotatable around a symmetry axis of the body 67. In other words, an axis of rotation of the rotation filter 66 may coincide with the rotation symmetry axis of the body 67. The rotation filter 66 may be rotated around the axis of rotation using actuators (not shown) and the angular deflection may be determined using sensors (not shown).

A first embodiment is shown in Fig. 6A, having an optical functional surface with angle-dependent transmission or reflection. The filter layer, i.e., the optical filter 68, may not be rotationally symmetrical to the symmetry axis of the body 67. In other words, the optical filter 68 may be arranged rotationally asymmetric with respect to the symmetry axis of the body 67. As a result, the transmission or reflection of a beam may be generally dependent on the angle of rotation of the body 67. Beam LB3' may be reflected outside of the beam path, in order not to hit the detector.

In a simple embodiment, the rotation filter 66 may be a cylindrical disc through which a flat optical filter 68 with an angle of incidence may be inserted at an angle. When the rotation filter 66 is rotated, a beam may experience different angles of incidence to the filter layer (i.e., the optical filter 68) if its propagation direction (within the body 67) is not parallel to the filter normal, and thus different transmission or reflection values.

In more complex embodiments, the filter layer (i.e., the optical filter 68) may be conical, spherical or otherwise shaped. In general, the body 67 may be designed in such a way that optical functions may also be fulfilled, e.g., as a lens or a mirror. As examples, Fig. 6B shows the rotation filter 66 with the body 67 shaped as a lens or with at least one outer surface formed as a lens surface. Fig. 6C shows the rotation filter 66 comprising an additional mirror layer 69. Fig. 6D shows the rotation filter 66, wherein the optical filter 68 is of spherical shape.

To prevent back reflections from the optical filter (layer) 68 from acting as an interfering signal, the optical filter 68 may be aligned in such a way that back reflections may leave the beam path and may be absorbed. Alternatively or additionally, an absorption filter may be used.

Figs. 6E and 6F show another embodiment of the rotation filter 66 which (alternatively or in addition to the optical filter 68) comprises an absorbing material 70 that is arranged within the (e.g., rotationally symmetrical) body 67, e.g., in such a way that a beam may experience different absorption when the rotation filter 66 is rotated around the axis of rotation. As a result, its transmission may depend on the angle of rotation, although the absorbing material 70 itself has no angle-dependent characteristics. In other words, the absorbing material 70 may be arranged inside the body 67 to provide an angle-sensitive absorption effect.

A simple embodiment may be the body 67 composed of a cylindrical transparent disc in which the absorbing material 70 composed of a cylindrical homogeneous filter with an oblique angle of incidence may be inserted. The characteristics of said rotation filter 66 may be described using Beer-Lambert's law.

When the rotation filter 66 is rotated, the light beam may experience different optical path lengths within the absorption material 70 and correspondingly different absorption or transmission, depending on its spatial direction.

As an example, the rotation filter 66 is shown in a 0°-orientation in Fig. 6E and in a 180°-orientation in Fig. 6F, wherein the rotation of the rotation filter 66 results in different optical path lengths within the absorption material 70.

However, the rotation filter 66 may not be composed of individual components with different optical densities, but the absorbing effect may be distributed differently in the body 67 (gradient absorber). In general, the outer shape of the body 67 may be designed in such a way that optical functions may also be fulfilled, e.g., as a lens or a mirror.

In general, both embodiments of the rotation filter 66 may also be combined, i.e., a rotation filter 66 that has both an optical functional surface with angle-dependent transmission or reflection and a material with path-dependent absorption.

Since the useful signal may experience no or only negligibly small beam offsets or focus position shifts when the angle of the rotation filter 66 is changed and are not superimposed by interference signals, the evaluation of the detection data may be carried out much more easily.

In order to carry out a measurement using the device 1, a large number of detection data, e.g., images, may be created, which differ in the variation of the beam properties, e.g., by varying the orientation of the at least one angle-sensitive optical element 6. The information sought may be extracted from the stored intensity patterns. The variation may be achieved with the variable angle-sensitive optical elements 6.

Generally, the transmission, reflection and absorption values of all optical surfaces, layers and materials are not only dependent on the angle of incidence, but also on wavelength and polarization of the incident light beam. It is therefore also possible to cause a variation by changing the wavelength or polarization, or by changing the beam direction of the light source 2. Variation may also be achieved by changing the filter surfaces, filter layers and filter materials. Variation may also be achieved by changing the geometric alignment of the elements of the beam path in relation to each other.

The shape of the light source 2 may be changed, e.g., sequentially ideal point-shaped, extended circular, ring-shaped luminous surfaces or luminous surfaces with a different shape may be used as light source 2. To determine the local tilts of the wavefront of the light beam, it may be technically easier and better to perform the variation using the variable angle-sensitive optical element 6. Other variations, such as the variation of the illumination wavelength, may also be used to determine surface properties such as roughness more accurately.

In order to extract the information from the detection data, the light beam (and/or the beam path of the light beam) may be abstracted using a model. The information may then be determined using a calculation rule based on the model.

Light may be modeled in different ways. A geometric ray model may be simple and provide good approximate solutions. It may be used to provide easy-to-understand methods for evaluating intensity patterns.

In the geometric ray model, the light source 2 may be assumed to be point-shaped. Light rays may represent the local normal vectors of the wavefront of the light beam. A ray of the light beam may be assigned to each pixel of the detection unit 9, in particular an image sensor. The direction of a single light ray associated with a single pixel may be determined relative to the angle-sensitive optical element 6. The determination of the light ray direction may correspond to the determination of the local tilt of the wavefront, from which, e.g., the local surface slope of the test object 4 may be inferred. The method may be carried out for a single ray of the light beam, but may be also carried out for the entire light beam simultaneously. It may be assumed that the light beam is directed at the test object 4 (specular reflection) and may be imaged onto the detection unit 9 using imaging optics 8.

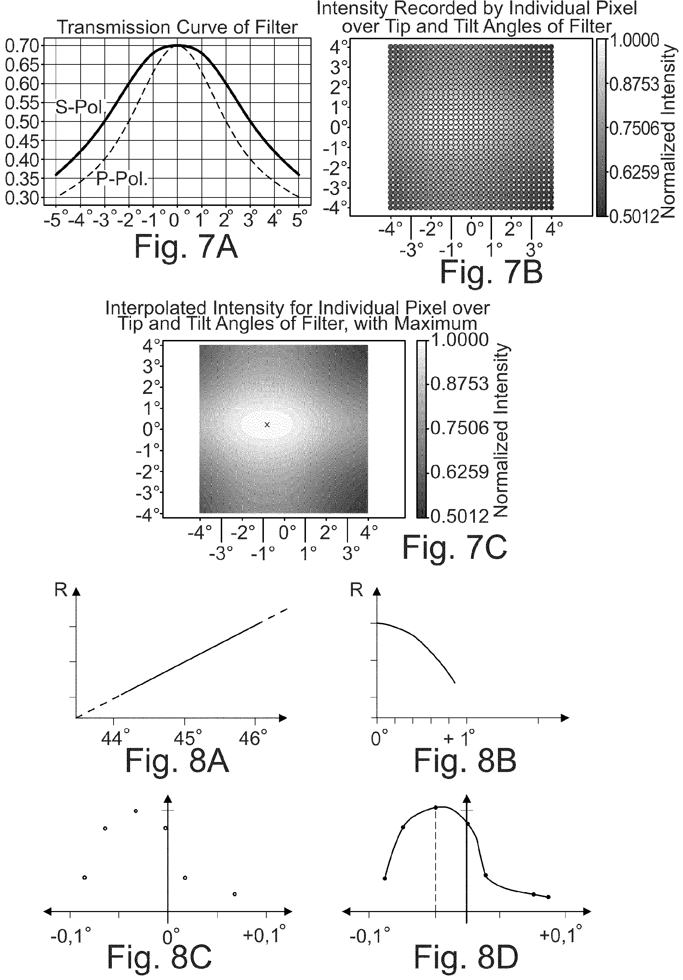

Figs. 7A-C show three diagrams illustrating an exemplary analysis of detection data based on such a geometric ray model, wherein an optical transmission filter, e.g., the combination of the optical transmission filter 61 and the absorption filter 62 as shown in Figs. 4B-D, or an interference filter is used as the angle-sensitive optical element 6.

As shown in Fig. 7A, the transmission curves for S- and P-polarized light over the angle of incidence may be symmetrical. Therefore, a transmission extremum, i.e., a maximum or minimum, may be found at a perpendicular incidence on the optical transmission filter. It may be assumed that the transmission extrema for S and P polarization are of the same type. A more precise knowledge of the transmission curve may otherwise not be necessary. The beam offset may not be taken into account or compensated for in the analysis algorithm.

To determine the direction of the light beam, the optical transmission filter may be positioned at different angles in order to record the incident intensity at the pixel. The angular positions may be scanned in a regular grid.

The recorded intensity data may represent a four-dimensional data set. Two dimensions may describe the position of the pixel coordinates of the camera (or the conjugate position of the object wavefront), the other two dimensions may describe the orientation angle of the optical transmission filter.

As shown in Fig. 7B, the intensity may be displayed for single pixels in a diagram using the angular positions of the filter. In this exemplary diagram, the beam offset has already been compensated. Dark circles correspond to filter orientations with low intensity and bright circles correspond to filter positions with high intensity.

Interpolation may then be performed between the measurement points, resulting, e.g., in the diagram as shown in Fig. 7C. The maximum or (weighted) centroid of the interpolated function may then be determined, which is indicated by a X in the diagram. Alternatively, a deconvolution of the recorded intensity pattern as shown in Fig. 7B or the interpolated intensity pattern as shown in Fig. 7C with the filter function of the angle-sensitive element as shown in Fig. 7A may be performed to recover the actually present intensity distribution. The angular values of the maximum or (weighted) centroid of the recorded, interpolated or recovered intensity function may correspond to the beam direction or the local tilt of the wavefront to the associated pixel relative to the optical transmission filter.

Figs. 8A-D show four diagrams illustrating another exemplary analysis of detection data based on a geometric ray model, wherein an open prism, e.g., the beam deflection device 65 as shown in Figs. 5A-C, is used as the angle-sensitive optical element 6.

The open prism (e.g., the beam deflection device 65) has an axis of rotation and may be constructed from two identical interference filters 65.1, 65.2. The intersection axis of the filter planes may correspond to the axis of rotation 65.3. Each of the interference filters 65.1, 65.2 may be selected so that the reflection curve increases monotonically in its working range, i.e., in an angular range around its nominal angle zero position (irrespective of any deflection of the beam relative to the plane of rotation). Such a reflection curve of a single interference filter is shown in Fig. 8A for a particular ray, wherein the horizontal axis corresponds to the working range with 45° being the nominal angle of incidence, and the vertical axis corresponds to the reflectance.

The open prism may be in its 0°-position when the beam of the nominal optical axis is incident on both surfaces 65.1, 65.2 of the interference filters 65.1, 65.2 at the same angle of incidence.

Both filter surfaces 65.1, 65.2 may be identical and/or may have identical properties. Their reflection curves may be plotted in a diagram. An incident beam may be reflected by both filters 65.1, 65.2. The combined reflection curve may have an extremum if the angle of incidence of the beam is the same on both filter surfaces 65.1, 65.2 and if the incident beam propagates in a plane normal to the rotation axis of the prism. An exemplary combined reflection curve of both interference filters 65.1, 65.2 is shown in Fig. 8B, wherein the horizontal axis corresponds to a rotation and/or tilt angle of the open prism (e.g., the beam deflection device 65) with respect to a nominal neutral position.

To determine the direction of a light ray, the open prism may be positioned at different angles relative to the angle zero position in order to record the incident intensity at the pixel. The intensity may be displayed in a diagram of the angular positions, as shown in Fig. 8C.

It is then possible to interpolate between the measurement points, as shown in Fig. 8D. The beam direction may then be determined by comparing the interpolated function to a set of functions with known beam directions (and other beam properties) and correlating it to the function with the smallest deviation. The set of functions with known beam directions may be generated with real measurements or with computer simulations. Alternatively, a deconvolution of the recorded intensity pattern as shown in Fig. 8C or the interpolated intensity pattern as shown in Fig. 8D with the filter function of the angle-sensitive element may be performed to recover the actually present intensity distribution. To achieve a higher degree of precision, a second prism of the same type of prism may be used, the axis of rotation of which may be ideally normal to the first prism.

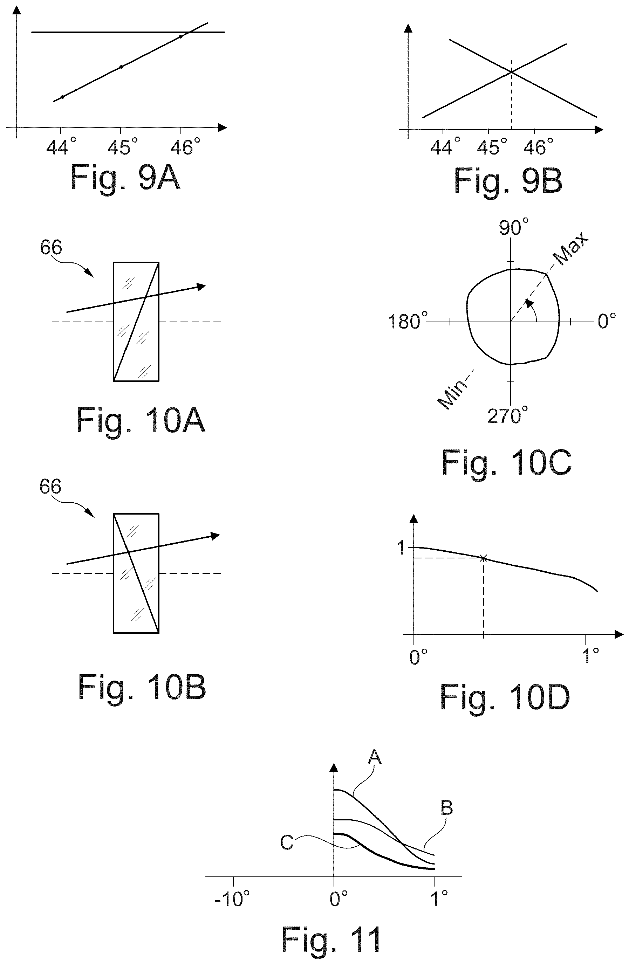

Figs. 9A-B show two diagrams illustrating another exemplary analysis of detection data based on a geometric ray model, wherein an open prism, e.g., the beam deflection device 65 as shown in Figs. 5A-C, is used as the angle-sensitive optical element 6.

In this embodiment, the open prism (e.g., the beam deflection device 65) may be constructed from two different interference filters 65.1, 65.2 rather than two identical interference filters. The intersection axis of the filter planes may correspond to the axis of rotation. Similar to the previous embodiment, the first interference filter 65.1 may be selected so that in its working range, i.e., in an angular range around its nominal angle of incidence, the reflection curve may increase monotonically (irrespective of any deflection of the beam relative to the plane of rotation). The second interference filter 65.2 may be selected so that its reflectance does not or does only slightly depend on the angle of incidence.

A second open prism (e.g., offset by approx. 180°) may be mounted on the axis of rotation. This second open prism may have the same properties as the first open prism, but the two interference filters 65.1, 65.2 are swapped. The zero angles of the prisms may be referenced to each other. As a result, a light beam may hit the filter layers of the two interference filters 65.1, 65.2 in reverse order as compared to the first prism. Both prisms together may form a pair of prisms with an axis of rotation.

As shown Fig. 9A the reflection curves of the two different filters for a particular beam may be plotted in a diagram , wherein the horizontal axis corresponds to the working range with 45° being the nominal angle of incidence, and the vertical axis corresponds to the reflectance. To determine the direction of a light ray, the open prisms may be positioned at different angular positions relative to the respective angular zero position in order to record the incident intensity at the pixel.

It is then possible to interpolate between the measurement points. Fig. 9B shows an exemplary diagram comprising the interpolated functions of both open prisms. Both interpolated functions may intersect at an angular value The beam direction may then be determined by comparing the interpolated functions to sets of functions with known beam directions (and other beam properties) and correlating it to the functions with the smallest deviation. The sets of functions with known beam directions may be generated with real measurements or with computer simulations. Alternatively, a deconvolution of the recorded intensity pattern or the interpolated intensity pattern as shown in Fig. 9B with the filter functions of the angle-sensitive elements may be performed to recover the actually present intensity distribution of the beam.

Figs. 10A-D show schematically four diagrams illustrating an exemplary analysis of detection data using the device 1 with an angle-sensitive optical element 6 comprising a rotation filter, e.g., the rotation filter 66 as shown in Figs. 6A-F.

In this example, the rotation filter 66 may be formed from an interference filter as the optical filter 68 embedded in the body 67 (composed of a cylindrical glass) with an angle of incidence. The interference filter may be designed in such a way that a higher transmission is possible at lower angles of incidence. It may be assumed that a distinction between S and P polarization is not necessary for the course of the transmission curve. This assumption is justified when using circularly polarized light.

The position of the rotation filter 66 (and/or the interference filter) in space may be described using spherical coordinates. The Z-axis may be the axis of rotation of the rotation filter 66 and the symmetry axis of the cylindrical glass body 67. The interference filter may be deflected around the Y axis with the angle of incidence of the light beam. The angle of incidence may be measured between the interference filter plane and the X-axis.

The angle between the filter normal and the Z-axis may correspond to the angle of incidence and may be the constant pole angle of the coordinate system of the rotation filter 66. When the rotation filter 66 is rotated around the Z-axis, the angle between the initial position of the X-axis and the instantaneous position of the X-axis may be referred to as the azimuth angle.

The rotation filter 66 may be positioned at different azimuth angles at which the intensity of the beam is recorded. As examples, Figs. 10A and 10B show the rotation filter 66 positioned at an azimuth angle with a maximum angle of incidence (and minimal transmitted light intensity) and with a minimum angle of incidence (and maximum transmitted light intensity), respectively.

The intensity curve may then be interpolated between the measured values. The maximum of the interpolated intensity curve may then be determined. This angle value may correspond to the azimuth angle of the incident light beam, as the angle of incidence is lowest at this point, regardless of the polar angle of the light beam. An exemplary diagram of the intensity over the azimuth angle is as shown in Fig. 10C, including the determined maximum and minimum.

Determining the polar angle of the light beam may require more precise knowledge of the transmission curve of the filter and may be determined using a numerical method. This may be particularly easy if a quotient is formed from the maximum and minimum of the interpolation function. At these extreme values, the azimuth angle is 0°. If the course of the filter curve and the angle of incidence are known, a new quotient curve may be formed from the quotient of the filter curve, offset once by the positive angle of incidence and once by the negative angle of incidence. The quotient formed from the measured values may be assigned to a position on the quotient curve, which may then correspond to the polar angle of the light beam.

Figure 10D shows an exemplary diagram of the quotient curve, wherein the horizontal axis corresponds to the polar angle and the vertical axis corresponds to the quotient based on the measurement values.

In another example, the rotation filter 66 is formed from absorbing material 70 of constant thickness, which may be embedded in the body 67 of a cylindrical glass with an angle of incidence, e.g., such as shown in Figs. 6E and 6F. The absorption in the absorbing material 70 may be homogeneous and may follow Beer-Lambert's law.

The position of the absorbing material 70 in space may be described using spherical coordinates. The Z-axis may be the axis of rotation of the rotation filter 66 and the axis of symmetry of the cylindrical glass body 67. The absorbing material 70 may be deflected around the Y-axis with the angle of incidence. The angle of incidence may be measured between the filter plane and the X-axis.

The angle between the filter normal and the Z-axis may correspond to the angle of incidence and may be the constant pole angle of the coordinate system of the rotation filter 66. When the rotation filter 66 is rotated around the Z-axis, the angle between the initial position of the X-axis and the instantaneous position of the X-axis may be referred to as the azimuth angle.

The rotation filter 66 may be positioned at different azimuth angles at which the intensity of the light beam is recorded. The intensity curve may then be interpolated between the measured values. The maximum of the interpolated intensity curve may then be determined. This angle value may correspond to the azimuth angle of the incident light beam, as the angle of incidence is lowest at this point, as well as the distance traveled in the absorbing material 70, which is lowest regardless of the polar angle of the beam. Accordingly, a diagram of the intensity over the azimuth angle may be compiled, e. g., similar to the diagram shown in Fig, 10C.

The polar angle of the light beam may be determined using a numerical method. This may be particularly easy if a quotient is formed from the maximum and minimum of the interpolation function. At these extreme values, the azimuth angle is 0°. If the thickness of the absorbing material 70, its angle of incident and its extinction are known, the polar angle may be determined using a numerical method using Beer-Lambert's law.

In addition to the determination of the local normal vectors of the wavefront of the light beam or, correspondingly, the determination of the local normal vectors of the surface of the test object 4, i.e., its topography, there are further measurement tasks that may be performed. These are, e.g., the determination of the reflectivity or reflectance of the surface, the identification of surface defects (scratches and/or digs), the determination of roughness and soiling (e.g., dust or haze), as well as the differentiation of overlapping wavefronts.

There are various mechanisms by which the surface properties of the test object 4 influence the properties of the light beam reflected or transmitted by it, which cause a characteristic change in the intensity measurements when the at least one angle-sensitive element 6 is varied.

One mechanism is absorption. The intensity of the light decreases. As a result, the intensity curve is lower by a factor of 0 to 1 as compared to a non-absorbing reference test object surface. Absorption may be caused, e.g., by dust, dirt, coatings or other modifications to the surface.

Another mechanism is scattering of light. There are various models that may be used to describe the formation of scattered light, e.g., Lambertian reflection, which characterizes ideally diffuse surfaces. When measuring with the at least one angle-selective optical element 6, scattering surfaces cause a change in the recorded intensity curve or pattern over the angle of variation. In the case of strong scattering, parts of the light outside the acceptance angle of an imaging optic can no longer reach the sensor, resulting in a reduction in the measured intensity.

Another mechanism is diffraction of light. This effect occurs with surface structures that act as optical gratings or diffractive elements. Diffractive surfaces cause a change in the intensity curve over the angle of variation when measuring with an angle-selective element. With strong diffraction, parts of the light outside the acceptance angle of an imaging optic can no longer reach the sensor, resulting in a general reduction in the measured intensity.

Other mechanisms are the deflection of light by a small, local surface irregularity such as a scratch and the influence of the polarization direction.

As the mechanisms described are particularly wavelength-dependent, it may be useful to vary the beam path by using more than one wavelength when performing the measurements for determining characteristics of a surface of the test object 4. Fig. 11 shows schematically a diagram with three intensity curves based on exemplary measurements using the device with a rotatable prism as an angle-selective optical element 6. The horizontal axis corresponds to a rotation angle of the prism and the vertical axis corresponds to an intensity.

Intensity curve A shows an intensity of a directionally reflective surface. Intensity curve B shows the intensity of a rough surface, wherein the intensity spectrum widens over the angle in comparison to curve A. Intensity curve C shows an intensity of a dirty surface, wherein a lower intensity is measured in comparison to curves A and B.

Thus, it is possible to derive surface properties from the intensity curve in a measurement with variation of the orientation of the at least one angle-selective optical element 6.

The evaluation using a geometric ray model only provides approximate solutions. For example, the light source 2 is usually assumed to be point-shaped in the model, wherein a real light source 2 has an extension. The real transmission, reflection and absorption curves are also dependent on the expansion or divergence of the light source 2. In addition, the ray model does not necessarily take polarization into account. The real transmission, reflection and absorption curves also depend on the polarization.

When using the approximate solution, it is to be expected that the measured values (of the wavefront or the test object 4) deviate from the real values. An exact evaluation of a measurement, which avoids the inadequacies of the ray model and allows for an exact characterization of surface properties, may no longer be calculated in a practicable period of time (by a human). To minimize the measurement error, computer-based models must be used that provide more accurate descriptions of the real physical phenomena. Computer-aided optics calculations are known and corresponding programs are marketed by many different providers. These programs may be specialized, e.g., in the design of optical systems or may be used, e.g., in computer graphics. They use various calculation models (wave optics, ray tracing) with which the behavior of light may be well simulated.

For the exact evaluation of the measurement results, the optical structure of the device 1 and the test object 4 may be generated in a computer in a simulation environment as a digital twin. The surface shape of the test object of the digital twin may be defined as a variable to be optimized. In a first step, the initial properties of the digital surface may be defined, e.g., as ideally corresponding to the manufacturing specifications or, in order to speed up the process, with the help of the described illustrative ray-based evaluation.

The variation of the beam path may then be simulated in the simulation environment and the simulated intensity measurements may be saved. The simulated intensity curves may be subtracted from the real, recorded intensity curves. This value may be the residual error value.

The shape and surface characteristics of the test object 4 may be then changed by the program and the simulated measurement may be repeated. The change in the test object properties should result in a reduction of the residual error value. The program may iterate the simulation until the residual error value drops to a minimum or ideally to zero. The properties of the digital twin of the test object and the real test object 4 may then match as closely as possible, therefore providing the desired information about the test object 4.

In addition to increasing the measurement accuracy by using the digital model, another advantage is that fewer measurement points (variations) have to be recorded. This reduces measurement time.

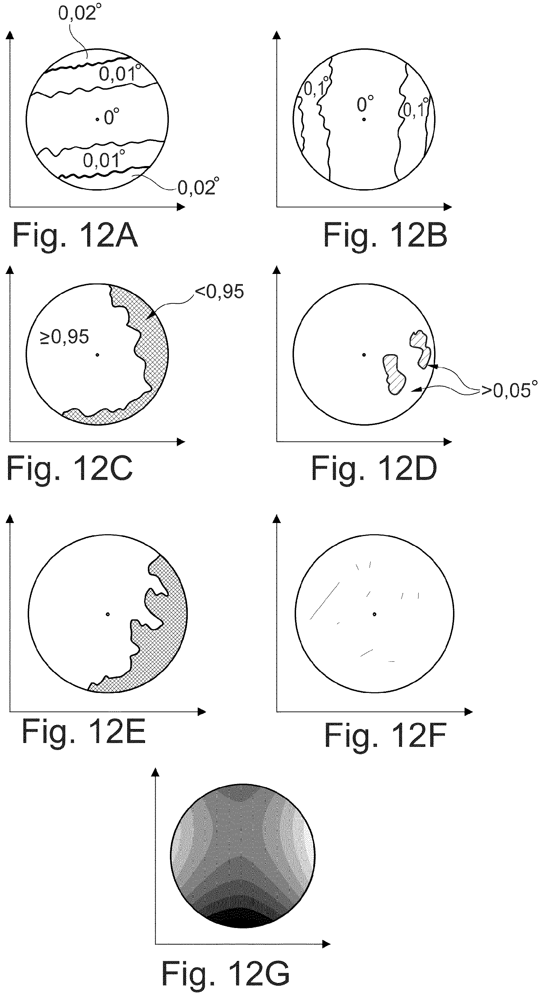

The measured values may then be output in various diagrams. Figs. 12A-G show exemplary diagrams, illustrating a surface slope of a test object's surface in the X direction (Fig. 12A), illustrating a surface slope of the surface in the Y direction (Fig. 12B), a relative reflectance of the surface (Fig. 12C), an angular spectrum of the light beam (Fig. 12D) which may be caused by a surface modification, a surface roughness of the surface (Fig. 12E), and surface irregularities of the surface such as scratch and dig (Fig. 12F). Figure 12G illustrates the surface error of the test object 4, which may be generated by integrating or fitting the surface slope information and subtracting the ideal form of the test object 4. Other diagrams based on the measured values are possible, such as a height profile of the surface, as well as amplitude functions of the local wavefronts.

### List of reference signs

- 1: device
- 2: light source
- 3: optical element
- 3a: collimating lens
- 3b: lens for adapting the wave front
- 3.1, 3.2: beam splitter
- 3.3: alignment sensor
- 3.4: zoom lens
- 4: test object
- 5: optical element
- 6: angle-sensitive optical element
- 6.1, 6.2: angle-sensitive optical elements
- 7: adjustment unit
- 8: imaging optics
- 9: detection unit
- 10: analysis unit
- 11: control unit
- 12: reference unit
- 13: polarization element
- 14: Fizeau interferometer
- 14a: light source
- 15: beam splitter
- 16: transmission sphere
- 17: reference surface of Fizeau cavity
- 61: optical transmission filter
- 62: absorption filter
- 63: angle-sensitive coating
- 64: anti-reflex coating
- 65: open prism, beam deflection device
- 65.1, 65.2: reflection surfaces
- 65.3: optical center
- 66: rotation filter
- 67: rotationally symmetric outer body
- 68: optical filter
- 69: mirror layer
- 70: absorbing material

- LB1-3, LB3': light beams

- 100: method
- S1-S5: method steps

## Claims

1. Device (1) for determining characteristics of a surface of a test object (4), wherein the device (1) comprises:
- a light source (2) for irradiating the test object (4) with a light beam (LB1);
- at least one angle-sensitive optical element (6) for reflecting and/or transmitting the light beam (LB2) reflected and/or transmitted by the test object (4);
- an adjustment unit (7) for adjusting an orientation of the at least one angle-sensitive optical element (6) with respect to the light beam (LB2) reflected and/or transmitted by the test object (4);
- a detection unit (9) for detecting the light beam (LB3) reflected and/or transmitted by the at least one angle-sensitive optical element (6); and
- an analysis unit (10) configured to:
- receive (S3) detection data provided by the detection unit (9), wherein the detection data comprises data of the detected light beam (LB3) reflected and/or transmitted by the at least one angle-sensitive optical element (6) at multiple different orientations of the at least one angle-sensitive optical element (6);
- analyze (S4) the received detection data in order to identify differences between the data at the multiple different orientations of the at least one angle-sensitive optical element (6); and
- determine (S5) the characteristics of the surface of the test object (4) based on the identified differences.

2. Device (1) according to claim 1, wherein the device (1) comprises:
- a control unit (11) configured to:
- control (S1) at least one actuator of the adjustment unit (7) to repeatedly adjust the orientation of the at least one angle-sensitive optical element (6) to one of the multiple different orientations; and
- control (S2) the detection unit (9) to detect the light beam (LB3) after each adjustment of the orientation of the at least one angle-sensitive optical element (6).

3. Device (1) according to claim 2, wherein
- the device (1) comprises a sensor unit configured to:
- determine a current orientation of the at least one angle-sensitive optical element (6) after each adjustment of the orientation of the at least one angle-sensitive optical element (6), wherein the current orientation is one of the multiple different orientations; and
- provide the multiple different orientations to the analysis unit (10); and
- the analysis unit (10) is configured to:
- determine the characteristics of the surface of the test object (4) based on the identified differences and the provided multiple different orientations.

4. Device (1) according to claim 2 or 3, wherein
- the control unit (11) is configured to:
- control the light source (2) to repeatedly vary a wavelength and/or a polarization of the light beam (LB1) provided by the light source (1); and
- control the detection unit (9) to detect the light beam (LB3) after each variation of the wavelength and/or polarization of the light beam (LB1); and
- the analysis unit (10) is configured to:
- receive (S3) the detection data which further comprises data of the detected light beam (LB3) reflected and/or transmitted by the at least one angle-sensitive optical element (6) at multiple different wavelengths and/or polarizations of the light beam (LB1) provided by the light source (1);
- analyze (S4) the received detection data in order to identify differences between the data at the multiple different orientations of the at least one angle-sensitive optical element (6) and at the multiple different wavelengths and/or polarizations of the light beam (LB1); and
- determine (S5) the characteristics of the surface of the test object (4) based on the identified differences.

5. Device (1) according to any of the preceding claims, wherein the at least one angle-sensitive optical element (6) comprises at least one combination of an optical transmission filter (61) and an absorption filter (62).

6. Device (1) according to claim 5, wherein the absorption filter (62) is provided with an angle-sensitive coating (63).

7. Device (1) according to claim 5 and 6, wherein the at least one angle-sensitive optical element (6) is arranged in an index matching fluid.

8. Device (1) according to any of the preceding claims, wherein
- the at least one angle-sensitive optical element (6) comprises at least one prism (65) and/or retro reflector rotatable around at least one rotation axis.

9. Device (1) according to claim 8, wherein the at least one prism (65) is a beam deflection device (65) comprising:
- multiple reflection surfaces (65.1, 65.2) having a predetermined relative orientation with respect to each other, wherein the beam deflection device (65) is configured to be tiltable around an optical center (65.3) of the beam deflection device (65) such that the predetermined relative orientation of the multiple reflection surfaces (65.1, 65.2) is maintained, and wherein the relative orientation of the multiple reflection surfaces (65.1, 65.2) is adjusted to cause a predetermined deflection angle for the deflected light beam, wherein
- the beam deflection device (65) is configured such that a variation of the predetermined beam deflection angle is zero or limited to a predetermined maximum deviation when tilting the beam deflection device (65) around the optical center (65.3) within a predetermined angular range of a tilt angle; and
- the beam deflection device (65) is configured such that a variation of the geometric properties of the deflected light beam is zero or limited to a predetermined maximum deviation when tilting the beam deflection device (65) around the optical center (65.3) within a predetermined angular range of a tilt angle; and
- at least one reflection surface (65.1, 65.2) of the multiple reflection surfaces (65.1, 65.2) comprises a functionality for altering a characteristic of the deflected light beam depending on the tilt angle of the beam deflection device (65) around the optical center (65.3).

10. Device (1) according to any of the preceding claims, wherein the at least one angle-sensitive optical element (6) comprises at least one rotation filter (66) which comprises a rotationally symmetric outer body (67) and an optical filter (68) and/or an absorbing material (70) arranged inside the body (67), wherein the at least one rotation filter (66) is rotatable around a symmetry axis of the body (67).

11. Device (1) according to claim 10, wherein the optical filter (68) is arranged asymmetric with respect to the symmetry axis of the body (67).

12. Device (1) according to claim 10 or 11, wherein the absorbing material (70) is arranged inside the body (67) to provide an angle-sensitive absorption effect.

13. Device (1) according to any of the preceding claims, wherein the detection unit (9) is an image sensor unit and the detection data comprises image data of a light intensity pattern of the detected light beam (LB3) reflected and/or transmitted by the at least one angle-sensitive optical element (6) at each of the multiple different orientations, respectively.

14. Device (1) according to any of the preceding claims, wherein
- the device (1) comprises:
- a reference unit (12) configured to perform one or more reference measurements of light intensity of the light source (1) and to provide the one or more reference measurements to the analysis unit; and
- the analysis unit (10) is configured to take the provided one or more reference measurements into account when analyzing (S4) the received detection data and/or when determining (S5) the characteristics of the surface of the test object (4).

15. Method (100) for determining characteristics of a surface of a test object (4) using the device (1) according to any of the preceding claims, wherein the method (100) comprises:
- controlling (S1) the adjustment unit (7) to repeatedly adjust the orientation of the at least one angle-sensitive optical element (6) to one of multiple different orientations;
- controlling (S2) the detection unit (9) to detect the light beam (LB3) after each adjustment of the orientation of the at least one angle-sensitive optical element (6);
- receiving (S3) detection data provided by the detection unit (9), wherein the detection data comprises data of the detected light beam (LB3) reflected and/or transmitted by the at least one angle-sensitive optical element (6) at multiple different orientations of the at least one angle-sensitive optical element (6);
- analyzing (S4) the received detection data in order to identify differences between the data at the multiple different orientations of the at least one angle-sensitive optical element (6); and
- determining (S5) the characteristics of the surface of the test object (4) based on the identified differences.
